# EUROPEAN PATENT SPECIFICATION

(11) **EP 3 703 517 B1**
(45) Date of publication and mention of the grant of the patent: **12.03.2025**
(21) Application number: 18800271.1
(22) Date of filing: 31.10.2018
(51) Int. Cl.: A24B 15/167

(54) **FLAVOURED VAPORISABLE FORMULATION**
AROMATISIERTE, VERDAMPFBARE FORMULIERUNG
FORMULATION VAPORISABLE AROMATISÉE

(30) Priority: 01.11.2017 GB 201718035
(43) Date of publication of application: 09.09.2020
(73) Proprietor: Nicoventures Trading Limited, London WC2R 3LA (GB)
(72) Inventor: MATHIE, Klaus, London WC2R 3LA (GB); BAILEY, Chelsea Elizabeth, London WC2R 3LA (GB); ROBERTS, Stuart, London WC2R 3LA (GB); PENA, Maria Montserrat Sanchez, London WC2R 3LA (GB)
(74) Representative: D Young & Co LLP
(86) International application number: PCT/GB2018/053137
(87) International publication number: WO 2019/086857

(56) References cited:
- US-A1- 2006 105 045
- US-A1- 2016 198 759
- US-B1- 6 893 647

## Description

### FIELD OF THE INVENTION

The present disclosure relates to a flavoured vaporisable formulation, containers in which are contained the flavoured vaporisable formulation and to electronic vapour provision systems such as electronic vapour delivery systems (e.g. e-cigarettes) incorporating said formulation.

### BACKGROUND TO THE INVENTION

Electronic vapour provision systems such as e-cigarettes generally contain a reservoir of liquid which is to be vaporised, typically containing nicotine. When a user inhales on the device, a heater is activated to vaporise a small amount of liquid, which is therefore inhaled by the user.

The use of e-cigarettes in the UK has grown rapidly, and it has been estimated that there are now almost three million people using them in the UK. E-cigarettes typically deliver a vapour containing nicotine and/or flavour to the user. For users requiring an experience of flavoured inhalation then a flavoured vapour may be provided either in combination with nicotine or, indeed, without the delivery of any nicotine.

Current e-cigarette formulations typically utilise glycerol and/or propylene glycol as the excipient substances. It is found that that levels of volatile ingredients, such as flavours and in particular menthol, in electronic cigarette liquids reduce over time during storage. The loss of flavours is found to have a negative impact on sensory experience for consumers. Furthermore, the application rate of flavours is constrained by a limited solubility in the electronic cigarette base fluid (typically a mixture of glycerol, water and propylene glycol, optionally together with nicotine).

US2016/198759 A1 discloses an e-cigarette liquid formulation comprising nicotine, cyclodextrin, a flavour and a combination of water, glycerol and one or more hydrophilic solvents, such as glycerol and propylene glycol.

### SUMMARY OF THE INVENTION

In one aspect there is provided a flavoured vaporisable formulation comprising
(i) one or more solvents;
(ii) a flavour; and
(iii) one or more cyclodextrins;
   wherein the flavoured vaporisable formulation contains water in an amount of from 0 to 10 wt.% based on the vaporisable formulation;
   wherein the flavoured vaporisable formulation further comprises nicotine.

The present invention further provides a process for forming a vapour, the process comprising
(a) providing a flavoured vaporisable formulation comprising
   (i) one or more solvents;
   (ii) a flavour; and
   (iii) one or more cyclodextrins;
      wherein the flavoured vaporisable formulation contains water in an amount of from 0 to 10 wt.% based on the vaporisable formulation;
      wherein the flavoured vaporisable formulation further comprises nicotine.; and
(b) vaporising the flavoured vaporisable formulation.

The present invention further provides a contained flavoured vaporisable formulation comprising
(a) a container; and
(b) a flavoured vaporisable formulation comprising
   (i) one or more solvents;
   (ii) a flavour; and
   (iii) one or more cyclodextrins;
      wherein the flavoured vaporisable formulation contains water in an amount of from 0 to 10 wt.% based on the vaporisable formulation;
      wherein the flavoured vaporisable formulation further comprises nicotine.

The present invention further provides an electronic vapour provision system comprising:
(a) a vaporiser for vaporising liquid for inhalation by a user of the electronic vapour provision system;
(b) a power supply comprising a cell or battery for supplying power to the vaporiser; and
(c) a flavoured vaporisable formulation comprising
   (i) one or more solvents;
   (ii) a flavour; and
   (iii) one or more cyclodextrins;
      wherein the flavoured vaporisable formulation contains water in an amount of from 0 to 10 wt.% based on the vaporisable formulation.

The present invention further provides a process for reducing loss of flavour over time of a flavoured vaporisable formulation
the process comprising the steps of
   (a) providing a vaporisable material comprising one or more solvents;
   (b) incorporating into the vaporisable material a flavour and one or more cyclodextrins to form the flavoured vaporisable formulation
wherein the flavoured vaporisable formulation comprises
   (i) one or more solvents;
   (ii) a flavour; and
   (iii) one or more cyclodextrins;
      wherein the flavoured vaporisable formulation contains water in an amount of from 0 to 10 wt.% based on the vaporisable formulation;
      wherein the flavoured vaporisable formulation further comprises nicotine.

The present invention further provides use of one or more cyclodextrins for reducing loss of flavour over time of a flavoured vaporisable formulation, wherein the flavoured vaporisable formulation comprises
(i) one or more solvents;
(ii) a flavour; and
(iii) one or more cyclodextrins;

wherein the flavoured vaporisable formulation contains water in an amount of from 0 to 10 wt.% based on the vaporisable formulation;
wherein the flavoured vaporisable formulation further comprises nicotine.

### DETAILED DESCRIPTION

As discussed herein the present invention provides a flavoured vaporisable formulation comprising (i) one or more solvents; (ii) a flavour; and (iii) one or more cyclodextrins; wherein the flavoured vaporisable formulation contains water in an amount of from 0 to 10 wt.% based on the vaporisable formulation; wherein the flavoured vaporisable formulation further comprises nicotine.

The use of cyclodextrins to solubilise hydrophobic drugs has been documented in the pharmaceutical industry. Specifically, cyclodextrins have been used where drugs are designed for treatment of respiratory diseases and therefore intended for deep lung inhalation.

Furthermore, the use of cyclodextrins to encapsulate flavours is known in consumer products, albeit not for products designed for inhalation. However, whilst cyclodextrin has been generally used to address solubility issues, in systems where solubility of hydrophobic components is not of concern the use of solubilising agents such as cyclodextrin would not be necessary. We have found that in the field of electronic cigarettes containing water in an amount of from 0 to 10 wt.% based on the vaporisable formulation the use of one or more cyclodextrins can be used to reduce the loss of flavour over time of a flavoured vaporisable formulation.

For ease of reference, these and further aspects of the present invention are now discussed under appropriate section headings. However, the teachings under each section are not necessarily limited to each particular section.

### Cyclodextrins

The flavoured vaporisable formulation comprises one or more cyclodextrins (which may be substituted or unsubstituted). In these aspects, the one or more cyclodextrins may be selected from the group consisting of unsubstituted cyclodextrins, substituted cyclodextrins and mixtures thereof. In these aspects, the at least one cyclodextrin may be an unsubstituted cyclodextrin. In these aspects, the one or more cyclodextrins may be selected from the group consisting of unsubstituted cyclodextrins. In these aspects, the at least one cyclodextrin may be a substituted cyclodextrin. In these aspects, the one or more cyclodextrins may be selected from the group consisting of substituted cyclodextrins.

In one aspect the one or more cyclodextrins are selected from the group consisting of unsubstituted (α)-cyclodextrin, substituted (α)-cyclodextrin, unsubstituted (β)-cyclodextrin, substituted (β)-cyclodextrin, unsubstituted (γ)-cyclodextrin, substituted (γ)-cyclodextrin, and mixtures thereof.

As discussed herein, we have found that each of the α, β and γ variants of cyclodextrin may be used and the most suitable one may be selected depending on the 'guest' components, such as the present flavours, to be complexed.

In one aspect the one or more cyclodextrins are selected from the group consisting of unsubstituted (α)-cyclodextrin, unsubstituted (β)-cyclodextrin, unsubstituted (γ)-cyclodextrin, and mixtures thereof.

In some aspects of the invention the flavoured vaporisable formulation may comprises one or more substituted cyclodextrins. In these aspects, or in aspects in which the one or more cyclodextrins may be substituted or unsubstituted, the one or more cyclodextrins may be selected from the group consisting of substituted (α)-cyclodextrin, substituted (β)-cyclodextrin, substituted (γ)-cyclodextrin, and mixtures thereof.

In one aspect the one or more cyclodextrins are selected from the group consisting of 2-hydroxy-propyl-α-cyclodextrin, 2-hydroxy-propyl-β-cyclodextrin, 2-hydroxy-propyl-γ-cyclodextrin and mixtures thereof. In one aspect the one or more cyclodextrins is at least 2-hydroxy-propyl-α-cyclodextrin. In one aspect the one or more cyclodextrins is at least 2-hydroxy-propyl-β-cyclodextrin. In one aspect the one or more cyclodextrins is at least 2-hydroxy-propyl-γ-cyclodextrin.

We have found that 2-hydroxy-propyl derivatives of cyclodextrins, such as 2-hydroxy-propyl-β-cyclodextrin are particularly preferred since these derivatives have increased solubility in water when compared to base cyclodextrins such as β-cyclodextrin.

The one or more cyclodextrins may be present in any suitable amount in the flavoured vaporisable formulation. In one aspect the one or more cyclodextrins are present in a total amount of no greater than 20 wt.% based on the flavoured vaporisable formulation. In one aspect the one or more cyclodextrins are present in a total amount of no greater than 18 wt.% based on the flavoured vaporisable formulation. In one aspect the one or more cyclodextrins are present in a total amount of no greater than 16 wt.% based on the flavoured vaporisable formulation. In one aspect the one or more cyclodextrins are present in a total amount of no greater than 14 wt.% based on the flavoured vaporisable formulation. In one aspect the one or more cyclodextrins are present in a total amount of no greater than 12 wt.% based on the flavoured vaporisable formulation. In one aspect the one or more cyclodextrins are present in a total amount of no greater than 10 wt.% based on the flavoured vaporisable formulation. In one aspect the one or more cyclodextrins are present in a total amount of no greater than 9 wt.% based on the flavoured vaporisable formulation. In one aspect the one or more cyclodextrins are present in a total amount of no greater than 8 wt.% based on the flavoured vaporisable formulation. In one aspect the one or more cyclodextrins are present in a total amount of no greater than 7 wt.% based on the flavoured vaporisable formulation. In one aspect the one or more cyclodextrins are present in a total amount of no greater than 6 wt.% based on the flavoured vaporisable formulation. In one aspect the one or more cyclodextrins are present in a total amount of no greater than 5 wt.% based on the flavoured vaporisable formulation.

In one aspect the one or more cyclodextrins are present in a total amount of at least 1 wt.% based on the flavoured vaporisable formulation. In one aspect the one or more cyclodextrins are present in a total amount of at least 2 wt.% based on the flavoured vaporisable formulation. In one aspect the one or more cyclodextrins are present in a total amount of at least 3 wt.% based on the flavoured vaporisable formulation. In one aspect the one or more cyclodextrins are present in a total amount of at least 4 wt.% based on the flavoured vaporisable formulation. In one aspect the one or more cyclodextrins are present in a total amount of at least 5 wt.% based on the flavoured vaporisable formulation. In one aspect the one or more cyclodextrins are present in a total amount of at least 6 wt.% based on the flavoured vaporisable formulation. In one aspect the one or more cyclodextrins are present in a total amount of at least 7 wt.% based on the flavoured vaporisable formulation. In one aspect the one or more cyclodextrins are present in a total amount of at least 8 wt.% based on the flavoured vaporisable formulation.

In one aspect the one or more cyclodextrins are present in a total amount of from 1 to 20 wt.% based on the flavoured vaporisable formulation. In one aspect the one or more cyclodextrins are present in a total amount of from 1 to 18 wt.% based on the flavoured vaporisable formulation. In one aspect the one or more cyclodextrins are present in a total amount of from 1 to 16 wt.% based on the flavoured vaporisable formulation. In one aspect the one or more cyclodextrins are present in a total amount of from 1 to 14 wt.% based on the flavoured vaporisable formulation. In one aspect the one or more cyclodextrins are present in a total amount of from 1 to 12 wt.% based on the flavoured vaporisable formulation. In one aspect the one or more cyclodextrins are present in a total amount of from 1 to 10 wt.% based on the flavoured vaporisable formulation. In one aspect the one or more cyclodextrins are present in a total amount of from 1 to 9 wt.% based on the flavoured vaporisable formulation. In one aspect the one or more cyclodextrins are present in a total amount of from 1 to 8 wt.% based on the flavoured vaporisable formulation. In one aspect the one or more cyclodextrins are present in a total amount of from 1 to 7 wt.% based on the flavoured vaporisable formulation. In one aspect the one or more cyclodextrins are present in a total amount of from 1 to 6 wt.% based on the flavoured vaporisable formulation. In one aspect the one or more cyclodextrins are present in a total amount of from 1 to 5 wt.% based on the flavoured vaporisable formulation.

In one aspect the one or more cyclodextrins are present in a total amount of from 2 to 20 wt.% based on the flavoured vaporisable formulation. In one aspect the one or more cyclodextrins are present in a total amount of from 2 to 18 wt.% based on the flavoured vaporisable formulation. In one aspect the one or more cyclodextrins are present in a total amount of from 2 to 16 wt.% based on the flavoured vaporisable formulation. In one aspect the one or more cyclodextrins are present in a total amount of from 2 to 14 wt.% based on the flavoured vaporisable formulation. In one aspect the one or more cyclodextrins are present in a total amount of from 2 to 12 wt.% based on the flavoured vaporisable formulation. In one aspect the one or more cyclodextrins are present in a total amount of from 2 to 10 wt.% based on the flavoured vaporisable formulation. In one aspect the one or more cyclodextrins are present in a total amount of from 2 to 9 wt.% based on the flavoured vaporisable formulation. In one aspect the one or more cyclodextrins are present in a total amount of from 2 to 8 wt.% based on the flavoured vaporisable formulation. In one aspect the one or more cyclodextrins are present in a total amount of from 2 to 7 wt.% based on the flavoured vaporisable formulation. In one aspect the one or more cyclodextrins are present in a total amount of from 2 to 6 wt.% based on the flavoured vaporisable formulation. In one aspect the one or more cyclodextrins are present in a total amount of from 2 to 5 wt.% based on the flavoured vaporisable formulation.

### Solvent

As discussed herein, the flavoured vaporisable formulation comprises one or more solvents. The one or more solvents may be any suitable solvents. In one aspect, the one or more solvents is selected from water, glycerol, propylene glycol and mixtures thereof. Other suitable solvents will be apparent to one skilled in the art.

The one or more solvents may be present in any suitable amount in the flavoured vaporisable formulation. In one aspect the one or more solvents is present in a total amount of at least 5 wt.% based on the flavoured vaporisable formulation. In one aspect the one or more solvents is present in a total amount of at least 10 wt.% based on the flavoured vaporisable formulation. In one aspect the one or more solvents is present in a total amount of at least 15 wt.% based on the flavoured vaporisable formulation. In one aspect the one or more solvents is present in a total amount of at least 20 wt.% based on the flavoured vaporisable formulation. In one aspect the one or more solvents is present in a total amount of at least 25 wt.% based on the flavoured vaporisable formulation. In one aspect the one or more solvents is present in a total amount of at least 30 wt.% based on the flavoured vaporisable formulation. In one aspect the one or more solvents is present in a total amount of at least 35 wt.% based on the flavoured vaporisable formulation. In one aspect the one or more solvents is present in a total amount of at least 40 wt.% based on the flavoured vaporisable formulation. In one aspect the one or more solvents is present in a total amount of at least 45 wt.% based on the flavoured vaporisable formulation. In one aspect the one or more solvents is present in a total amount of at least 50 wt.% based on the flavoured vaporisable formulation. In one aspect the one or more solvents is present in a total amount of at least 55 wt.% based on the flavoured vaporisable formulation. In one aspect the one or more solvents is present in a total amount of at least 60 wt.% based on the flavoured vaporisable formulation. In one aspect the one or more solvents is present in a total amount of at least 65 wt.% based on the flavoured vaporisable formulation. In one aspect the one or more solvents is present in a total amount of at least 70 wt.% based on the flavoured vaporisable formulation. In one aspect the one or more solvents is present in a total amount of at least 75 wt.% based on the flavoured vaporisable formulation. In one aspect the one or more solvents is present in a total amount of at least 80 wt.% based on the flavoured vaporisable formulation. In one aspect the one or more solvents is present in a total amount of at least 85 wt.% based on the flavoured vaporisable formulation. In one aspect the one or more solvents is present in a total amount of at least 90 wt.% based on the flavoured vaporisable formulation.

In one aspect the one or more solvents is present in a total amount of from 5 to 99 wt.% based on the flavoured vaporisable formulation. In one aspect the one or more solvents is present in a total amount of from 10 to 99 wt.% based on the flavoured vaporisable formulation. In one aspect the one or more solvents is present in a total amount of from 15 to 99 wt.% based on the flavoured vaporisable formulation. In one aspect the one or more solvents is present in a total amount of from 20 to 99 wt.% based on the flavoured vaporisable formulation. In one aspect the one or more solvents is present in a total amount of from 25 to 99 wt.% based on the flavoured vaporisable formulation. In one aspect the one or more solvents is present in a total amount of from 30 to 99 wt.% based on the flavoured vaporisable formulation. In one aspect the one or more solvents is present in a total amount of from 35 to 99 wt.% based on the flavoured vaporisable formulation. In one aspect the one or more solvents is present in a total amount of from 40 to 99 wt.% based on the flavoured vaporisable formulation. In one aspect the one or more solvents is present in a total amount of from 45 to 99 wt.% based on the flavoured vaporisable formulation. In one aspect the one or more solvents is present in a total amount of from 50 to 99 wt.% based on the flavoured vaporisable formulation. In one aspect the one or more solvents is present in a total amount of from 55 to 99 wt.% based on the flavoured vaporisable formulation. In one aspect the one or more solvents is present in a total amount of from 60 to 99 wt.% based on the flavoured vaporisable formulation. In one aspect the one or more solvents is present in a total amount of from 65 to 99 wt.% based on the flavoured vaporisable formulation. In one aspect the one or more solvents is present in a total amount of from 70 to 99 wt.% based on the flavoured vaporisable formulation. In one aspect the one or more solvents is present in a total amount of from 75 to 99 wt.% based on the flavoured vaporisable formulation. In one aspect the one or more solvents is present in a total amount of from 80 to 99 wt.% based on the flavoured vaporisable formulation. In one aspect the one or more solvents is present in a total amount of from 85 to 99 wt.% based on the flavoured vaporisable formulation. In one aspect the one or more solvents is present in a total amount of from 90 to 99 wt.% based on the flavoured vaporisable formulation.

In one aspect the one or more solvents is present in a total amount of from 5 to 95 wt.% based on the flavoured vaporisable formulation. In one aspect the one or more solvents is present in a total amount of from 10 to 95 wt.% based on the flavoured vaporisable formulation. In one aspect the one or more solvents is present in a total amount of from 15 to 95 wt.% based on the flavoured vaporisable formulation. In one aspect the one or more solvents is present in a total amount of from 20 to 95 wt.% based on the flavoured vaporisable formulation. In one aspect the one or more solvents is present in a total amount of from 25 to 95 wt.% based on the flavoured vaporisable formulation. In one aspect the one or more solvents is present in a total amount of from 30 to 95 wt.% based on the flavoured vaporisable formulation. In one aspect the one or more solvents is present in a total amount of from 35 to 95 wt.% based on the flavoured vaporisable formulation. In one aspect the one or more solvents is present in a total amount of from 40 to 95 wt.% based on the flavoured vaporisable formulation. In one aspect the one or more solvents is present in a total amount of from 45 to 95 wt.% based on the flavoured vaporisable formulation. In one aspect the one or more solvents is present in a total amount of from 50 to 95 wt.% based on the flavoured vaporisable formulation. In one aspect the one or more solvents is present in a total amount of from 55 to 95 wt.% based on the flavoured vaporisable formulation. In one aspect the one or more solvents is present in a total amount of from 60 to 95 wt.% based on the flavoured vaporisable formulation. In one aspect the one or more solvents is present in a total amount of from 65 to 95 wt.% based on the flavoured vaporisable formulation. In one aspect the one or more solvents is present in a total amount of from 70 to 95 wt.% based on the flavoured vaporisable formulation. In one aspect the one or more solvents is present in a total amount of from 75 to 95 wt.% based on the flavoured vaporisable formulation. In one aspect the one or more solvents is present in a total amount of from 80 to 95 wt.% based on the flavoured vaporisable formulation. In one aspect the one or more solvents is present in a total amount of from 85 to 95 wt.% based on the flavoured vaporisable formulation. In one aspect the one or more solvents is present in a total amount of from 90 to 95 wt.% based on the flavoured vaporisable formulation.

In one aspect the one or more solvents is present in a total amount of from 5 to 90 wt.% based on the flavoured vaporisable formulation. In one aspect the one or more solvents is present in a total amount of from 10 to 90 wt.% based on the flavoured vaporisable formulation. In one aspect the one or more solvents is present in a total amount of from 15 to 90 wt.% based on the flavoured vaporisable formulation. In one aspect the one or more solvents is present in a total amount of from 20 to 90 wt.% based on the flavoured vaporisable formulation. In one aspect the one or more solvents is present in a total amount of from 25 to 90 wt.% based on the flavoured vaporisable formulation. In one aspect the one or more solvents is present in a total amount of from 30 to 90 wt.% based on the flavoured vaporisable formulation. In one aspect the one or more solvents is present in a total amount of from 35 to 90 wt.% based on the flavoured vaporisable formulation. In one aspect the one or more solvents is present in a total amount of from 40 to 90 wt.% based on the flavoured vaporisable formulation. In one aspect the one or more solvents is present in a total amount of from 45 to 90 wt.% based on the flavoured vaporisable formulation. In one aspect the one or more solvents is present in a total amount of from 50 to 90 wt.% based on the flavoured vaporisable formulation. In one aspect the one or more solvents is present in a total amount of from 55 to 90 wt.% based on the flavoured vaporisable formulation. In one aspect the one or more solvents is present in a total amount of from 60 to 90 wt.% based on the flavoured vaporisable formulation. In one aspect the one or more solvents is present in a total amount of from 65 to 90 wt.% based on the flavoured vaporisable formulation. In one aspect the one or more solvents is present in a total amount of from 70 to 90 wt.% based on the flavoured vaporisable formulation. In one aspect the one or more solvents is present in a total amount of from 75 to 90 wt.% based on the flavoured vaporisable formulation. In one aspect the one or more solvents is present in a total amount of from 80 to 90 wt.% based on the flavoured vaporisable formulation. In one aspect the one or more solvents is present in a total amount of from 85 to 90 wt.% based on the flavoured vaporisable formulation.

As discussed herein, in one aspect the solvent is at least glycerol. The glycerol may be present in any suitable amount in the flavoured vaporisable formulation. In one aspect the glycerol is present in a total amount of at least 5 wt.% based on the flavoured vaporisable formulation. In one aspect the glycerol is present in a total amount of at least 10 wt.% based on the flavoured vaporisable formulation. In one aspect the glycerol is present in a total amount of at least 15 wt.% based on the flavoured vaporisable formulation. In one aspect the glycerol is present in a total amount of at least 20 wt.% based on the flavoured vaporisable formulation. In one aspect the glycerol is present in a total amount of at least 25 wt.% based on the flavoured vaporisable formulation. In one aspect the glycerol is present in a total amount of at least 30 wt.% based on the flavoured vaporisable formulation. In one aspect the glycerol is present in a total amount of at least 35 wt.% based on the flavoured vaporisable formulation.

In one aspect the glycerol is present in a total amount of from 5 to 40 wt.% based on the flavoured vaporisable formulation. In one aspect the glycerol is present in a total amount of from 10 to 40 wt.% based on the flavoured vaporisable formulation. In one aspect the glycerol is present in a total amount of from 15 to 40 wt.% based on the flavoured vaporisable formulation. In one aspect the glycerol is present in a total amount of from 20 to 40 wt.% based on the flavoured vaporisable formulation. In one aspect the glycerol is present in a total amount of from 25 to 40 wt.% based on the flavoured vaporisable formulation. In one aspect the glycerol is present in a total amount of from 30 to 40 wt.% based on the flavoured vaporisable formulation. In one aspect the glycerol is present in a total amount of from 35 to 40 wt.% based on the flavoured vaporisable formulation.

As discussed herein, in one aspect the solvent is at least propylene glycol. The propylene glycol may be present in any suitable amount in the flavoured vaporisable formulation. In one aspect the propylene glycol is present in a total amount of at least 5 wt.% based on the flavoured vaporisable formulation. In one aspect the propylene glycol is present in a total amount of at least 10 wt.% based on the flavoured vaporisable formulation. In one aspect the propylene glycol is present in a total amount of at least 15 wt.% based on the flavoured vaporisable formulation. In one aspect the propylene glycol is present in a total amount of at least 20 wt.% based on the flavoured vaporisable formulation. In one aspect the propylene glycol is present in a total amount of at least 25 wt.% based on the flavoured vaporisable formulation. In one aspect the propylene glycol is present in a total amount of at least 30 wt.% based on the flavoured vaporisable formulation. In one aspect the propylene glycol is present in a total amount of at least 35 wt.% based on the flavoured vaporisable formulation.

In one aspect the propylene glycol is present in a total amount of from 5 to 40 wt.% based on the flavoured vaporisable formulation. In one aspect the propylene glycol is present in a total amount of from 10 to 40 wt.% based on the flavoured vaporisable formulation. In one aspect the propylene glycol is present in a total amount of from 15 to 40 wt.% based on the flavoured vaporisable formulation. In one aspect the propylene glycol is present in a total amount of from 20 to 40 wt.% based on the flavoured vaporisable formulation. In one aspect the propylene glycol is present in a total amount of from 25 to 40 wt.% based on the flavoured vaporisable formulation. In one aspect the propylene glycol is present in a total amount of from 30 to 40 wt.% based on the flavoured vaporisable formulation. In one aspect the propylene glycol is present in a total amount of from 35 to 40 wt.% based on the flavoured vaporisable formulation.

### Water

As discussed herein, the flavoured vaporisable formulation contains water in an amount of from 0 to 10 wt.% based on the vaporisable formulation. This amount includes 0% water based on the vaporisable formulation and therefore the flavoured vaporisable formulation may contain water or may not contain water.

In one aspect the flavoured vaporisable formulation contains water. The water may be present in any suitable amount in the flavoured vaporisable formulation. In one aspect water is present in a total amount of from 0 to 9 wt.% based on the vaporisable formulation. In one aspect water is present in a total amount of from 0 to 8 wt.% based on the vaporisable formulation. In one aspect water is present in a total amount of from 0 to 7 wt.% based on the vaporisable formulation. In one aspect water is present in a total amount of from 0 to 6 wt.% based on the vaporisable formulation. In one aspect water is present in a total amount of from 0 to 5 wt.% based on the vaporisable formulation. In one aspect water is present in a total amount of from 0 to 4 wt.% based on the vaporisable formulation. In one aspect water is present in a total amount of from 0 to 3 wt.% based on the vaporisable formulation. In one aspect water is present in a total amount of from 0 to 2 wt.% based on the vaporisable formulation. In one aspect water is present in a total amount of from 0 to 1 wt.% based on the vaporisable formulation. In one aspect water is present in a total amount of from 0 to 0.5 wt.% based on the vaporisable formulation. In one aspect water is present in a total amount of from 0 to 0.2 wt.% based on the vaporisable formulation. In one aspect water is present in a total amount of from 0 to 0.1 wt.% based on the vaporisable formulation. In one aspect water is present in a total amount of from 0 to 0.05 wt.% based on the vaporisable formulation. In one aspect water is present in a total amount of from 0 to 0.02 wt.% based on the vaporisable formulation. In one aspect water is present in a total amount of from 0 to 0.01 wt.% based on the vaporisable formulation. In one aspect water is present in a total amount of from 0 to 0.001 wt.% based on the vaporisable formulation. In one aspect water is present in a total amount of from 0 to 0.0001 wt.% based on the vaporisable formulation. In one aspect water is present in a total amount of from 0 to 0.00001 wt.% based on the vaporisable formulation.

In an alternative embodiment, the solvent comprises substantially no water. In this regard, it is noted that some formulations may be hygroscopic and as such water ingress into the formulation cannot be ruled out. Accordingly, by "substantially no water" it is meant that the amount of water present is less than 0.1 wt.% based on the flavoured vaporisable formulation.

### Flavours

As used herein, the terms "flavour" and "flavourant" refer to materials which, where local regulations permit, are add with the intention to create a desired taste or aroma in a product for adult consumers. Thus, whilst it is acknowledged that some other functional components of the formulation may contain components that have a perceptible flavour or aroma, such components are not added for this purpose and as such are not considered to be a "flavour" or "flavourant" in the context of the present invention. Furthermore, it will be understood that "flavours" or "flavourants" may well composed of one or more individual compounds that together form an identifiable flavour. As such, reference here to "flavour" or "flavourant" includes both singular and multi-component flavours.

As discussed here the flavoured vaporisable formulation of the present invention comprises one or more flavours.

In one aspect the flavoured vaporisable formulation of the present invention comprises only one flavour. In one aspect the flavoured vaporisable formulation of the present invention comprises more than one flavour. In one aspect the flavoured vaporisable formulation of the present invention comprises two or more flavours. In one aspect the flavoured vaporisable formulation of the present invention comprises only two flavours. In one aspect the flavoured vaporisable formulation of the present invention comprises three or more flavours. In one aspect the flavoured vaporisable formulation of the present invention comprises only three flavours. In one aspect the flavoured vaporisable formulation of the present invention comprises four or more flavours. In one aspect the flavoured vaporisable formulation of the present invention comprises only four flavours. In one aspect the flavoured vaporisable formulation of the present invention comprises five or more flavours. In one aspect the flavoured vaporisable formulation of the present invention comprises only five flavours.

In one aspect the one or more flavours are selected from the group consisting of extracts (e.g. liquorice, hydrangea, Japanese white bark magnolia leaf, chamomile, fenugreek, clove, menthol, Japanese mint, aniseed, cinnamon, herb, wintergreen, cherry, berry, peach, apple, Drambuie, bourbon, scotch, whiskey, spearmint, peppermint, lavender, cardamom, celery, cascarilla, nutmeg, sandalwood, bergamot, geranium, honey essence, rose oil, vanilla, lemon oil, orange oil, cassia, caraway, cognac, jasmine, ylang-ylang, sage, fennel, piment, ginger, anise, coriander, coffee, or a mint oil from any species of the genus Mentha), flavour enhancers, bitterness receptor site blockers, sensorial receptor site activators or stimulators, sugars and/or sugar substitutes (e.g., sucralose, acesulfame potassium, aspartame, saccharine, cyclamates, lactose, sucrose, glucose, fructose, sorbitol, or mannitol), and other additives such as charcoal, chlorophyll, minerals, botanicals, or breath freshening agents. They may be imitation, synthetic or natural ingredients or blends thereof. They may be in any suitable form, for example, oil, liquid, or powder.

In one aspect the one or more flavours are selected from the group consisting of (4-(para-)methoxyphenyl)-2-butanone, vanillin, γ-undecalactone, menthone, 5-propenyl guaethol, menthol, para-mentha-8-thiol-3- and mixtures thereof.

In one aspect the flavour is at least menthol. In one aspect the flavour is only menthol. In one aspect menthol comprises at least 30wt.% of the flavours present in the flavoured vaporisable formulation. In one aspect menthol comprises at least 40wt.% of the flavours present in the flavoured vaporisable formulation. In one aspect menthol comprises at least 50wt.% of the flavours present in the flavoured vaporisable formulation. In one aspect menthol comprises at least 60wt.% of the flavours present in the flavoured vaporisable formulation. In one aspect menthol comprises at least 70wt.% of the flavours present in the flavoured vaporisable formulation.

In one aspect, at least one of the one or more flavours is hydrophobic. In one aspect each of the one or more flavours is hydrophobic.

The one or more flavours may be present in any amount to deliver the desired flavour to the flavoured vaporisable formulation. In one aspect the one or more flavours are present in a total amount of no greater than 10 wt.% based on the flavoured vaporisable formulation. In one aspect the one or more flavours are present in a total amount of no greater than 9 wt.% based on the flavoured vaporisable formulation. In one aspect the one or more flavours are present in a total amount of no greater than 8 wt.% based on the flavoured vaporisable formulation. In one aspect the one or more flavours are present in a total amount of no greater than 7 wt.% based on the flavoured vaporisable formulation. In one aspect the one or more flavours are present in a total amount of no greater than 6 wt.% based on the flavoured vaporisable formulation. In one aspect the one or more flavours are present in a total amount of no greater than 5 wt.% based on the flavoured vaporisable formulation. In one aspect the one or more flavours are present in a total amount of no greater than 4 wt.% based on the flavoured vaporisable formulation. In one aspect the one or more flavours are present in a total amount of no greater than 3 wt.% based on the flavoured vaporisable formulation. In one aspect the one or more flavours are present in a total amount of no greater than 2 wt.% based on the flavoured vaporisable formulation. In one aspect the one or more flavours are present in a total amount of no greater than 1.8wt.% based on the flavoured vaporisable formulation. In one aspect the one or more flavours are present in a total amount of no greater than 1.6 wt.% based on the flavoured vaporisable formulation. In one aspect the one or more flavours are present in a total amount of no greater than 1.5 wt.% based on the flavoured vaporisable formulation. In one aspect the one or more flavours are present in a total amount of no greater than 1.4 wt.% based on the flavoured vaporisable formulation. In one aspect the one or more flavours are present in a total amount of no greater than 1.3 wt.% based on the flavoured vaporisable formulation. In one aspect the one or more flavours are present in a total amount of no greater than 1.2 wt.% based on the flavoured vaporisable formulation. In one aspect the one or more flavours are present in a total amount of no greater than 1.1 wt.% based on the flavoured vaporisable formulation. In one aspect the one or more flavours are present in a total amount of no greater than 1 wt.% based on the flavoured vaporisable formulation.

In one aspect the one or more flavours are present in a total amount of at least 0.01 wt.% based on the flavoured vaporisable formulation. In one aspect the one or more flavours are present in a total amount of at least 0.02 wt.% based on the flavoured vaporisable formulation. In one aspect the one or more flavours are present in a total amount of at least 0.03 wt.% based on the flavoured vaporisable formulation. In one aspect the one or more flavours are present in a total amount of at least 0.04 wt.% based on the flavoured vaporisable formulation. In one aspect the one or more flavours are present in a total amount of at least 0.05 wt.% based on the flavoured vaporisable formulation. In one aspect the one or more flavours are present in a total amount of at least 0.06 wt.% based on the flavoured vaporisable formulation. In one aspect the one or more flavours are present in a total amount of at least 0.07 wt.% based on the flavoured vaporisable formulation. In one aspect the one or more flavours are present in a total amount of at least 0.08 wt.% based on the flavoured vaporisable formulation. In one aspect the one or more flavours are present in a total amount of at least 0.09 wt.% based on the flavoured vaporisable formulation. In one aspect the one or more flavours are present in a total amount of at least 0.1 wt.% based on the flavoured vaporisable formulation. In one aspect the one or more flavours are present in a total amount of at least 0.2 wt.% based on the flavoured vaporisable formulation. In one aspect the one or more flavours are present in a total amount of at least 0.3 wt.% based on the flavoured vaporisable formulation. In one aspect the one or more flavours are present in a total amount of at least 0.4 wt.% based on the flavoured vaporisable formulation. In one aspect the one or more flavours are present in a total amount of at least 0.5 wt.% based on the flavoured vaporisable formulation. In one aspect the one or more flavours are present in a total amount of at least 0.6 wt.% based on the flavoured vaporisable formulation. In one aspect the one or more flavours are present in a total amount of at least 0.7 wt.% based on the flavoured vaporisable formulation. In one aspect the one or more flavours are present in a total amount of at least 0.8 wt.% based on the flavoured vaporisable formulation. In one aspect the one or more flavours are present in a total amount of at least 0.9 wt.% based on the flavoured vaporisable formulation.

In one aspect the one or more flavours are present in a total amount of from 0.01 to 10 wt.% based on the flavoured vaporisable formulation. In one aspect the one or more flavours are present in a total amount of from 0.01 to 9 wt.% based on the flavoured vaporisable formulation. In one aspect the one or more flavours are present in a total amount of from 0.01 to 8 wt.% based on the flavoured vaporisable formulation. In one aspect the one or more flavours are present in a total amount of from 0.01 to 7 wt.% based on the flavoured vaporisable formulation. In one aspect the one or more flavours are present in a total amount of from 0.01 to 6 wt.% based on the flavoured vaporisable formulation. In one aspect the one or more flavours are present in a total amount of from 0.01 to 5 wt.% based on the flavoured vaporisable formulation. In one aspect the one or more flavours are present in a total amount of from 0.01 to 4 wt.% based on the flavoured vaporisable formulation. In one aspect the one or more flavours are present in a total amount of from 0.01 to 3 wt.% based on the flavoured vaporisable formulation. In one aspect the one or more flavours are present in a total amount of from 0.01 to 2 wt.% based on the flavoured vaporisable formulation. In one aspect the one or more flavours are present in a total amount of from 0.01 to 1.8wt.% based on the flavoured vaporisable formulation. In one aspect the one or more flavours are present in a total amount of from 0.01 to 1.6 wt.% based on the flavoured vaporisable formulation. In one aspect the one or more flavours are present in a total amount of from 0.01 to 1.5 wt.% based on the flavoured vaporisable formulation. In one aspect the one or more flavours are present in a total amount of from 0.01 to 1.4 wt.% based on the flavoured vaporisable formulation. In one aspect the one or more flavours are present in a total amount of from 0.01 to 1.3 wt.% based on the flavoured vaporisable formulation. In one aspect the one or more flavours are present in a total amount of from 0.01 to 1.2 wt.% based on the flavoured vaporisable formulation. In one aspect the one or more flavours are present in a total amount of from 0.01 to 1.1. wt.% based on the flavoured vaporisable formulation. In one aspect the one or more flavours are present in a total amount of from 0.01 to 1 wt.% based on the flavoured vaporisable formulation.

We have found that the addition of the one or more flavours in a molar excess with respect to the one or more cyclodextrins may result in the one or more flavours precipitating from the formulation. Therefore in one aspect, the one or more cyclodextrins are present in a molar excess with respect to the one or more flavours. In one aspect, the molar ratio of cyclodextrins to flavours is at least 1.2:1. In one aspect, the molar ratio of cyclodextrins to flavours is at least 1.4:1. In one aspect, the molar ratio of cyclodextrins to flavours is at least 1.6:1. In one aspect, the molar ratio of cyclodextrins to flavours is at least 1.8:1. In one aspect, the molar ratio of cyclodextrins to flavours is at least 2:1. In one aspect, the molar ratio of cyclodextrins to flavours is from 5:1 to 1.5:1. In one aspect, the molar ratio of cyclodextrins to flavours is from 4:1 to 1.5:1. In one aspect, the molar ratio of cyclodextrins to flavours is from 2:1 to 1.5:1. In one aspect, the molar ratio of cyclodextrins to flavours is from 2:1 to 1.5:1. In one aspect, the molar ratio of cyclodextrins to flavours is from 2:1 to 1.2:1.

### Flavoured vaporisable formulation

The flavoured vaporisable formulation of the present invention may contain one or more further components. These components may be selected depending on the nature of the formulation. In one aspect, the flavoured vaporisable formulation further comprises an active agent. By "active agent" it is meant an agent which has a biological effect on a subject when the vapour is inhaled. The one or more active agents may be of synthetic or natural origin. The active could be an extract from a botanical, such as from a plant in the tobacco family. An example active is nicotine.

In one aspect, the active agent is at least nicotine. Thus, the present invention may provide a flavoured vaporisable formulation comprising a flavoured vaporisable formulation comprising (i) one or more solvents; (ii) a flavour; (iii) one or more substituted cyclodextrins; and (iv) nicotine. The present invention may further provide a flavoured vaporisable formulation comprising (i) one or more solvents; (ii) a flavour; (iii) one or more cyclodextrins, wherein the total content of cyclodextrins is at least 1wt.% based on the vaporisable formulation; and (iv) nicotine.

Nicotine may be provided at any suitable amount depending on the desired dosage to be inhaled by the user. In one aspect nicotine is present in an amount of no greater than 6 wt% based on the total weight of the flavoured vaporisable formulation. In one aspect nicotine is present in an amount of from 0.4 to 6 wt% based on the total weight of the flavoured vaporisable formulation. In one aspect nicotine is present in an amount of from 0.8 to 6 wt% based on the total weight of the flavoured vaporisable formulation. In one aspect nicotine is present in an amount of from 1 to 6 wt% based on the total weight of the flavoured vaporisable formulation. In one aspect nicotine is present in an amount of from 1.8 to 6 wt% based on the total weight of the flavoured vaporisable formulation. In one aspect nicotine is present in an amount of from 0.4 to 5 wt% based on the total weight of the flavoured vaporisable formulation. In one aspect nicotine is present in an amount of from 0.8 to 5 wt% based on the total weight of the flavoured vaporisable formulation. In one aspect nicotine is present in an amount of from 1 to 5 wt% based on the total weight of the flavoured vaporisable formulation. In one aspect nicotine is present in an amount of from 1.8 to 5 wt% based on the total weight of the flavoured vaporisable formulation. In one aspect nicotine is present in an amount of no greater than 4 wt% based on the total weight of the flavoured vaporisable formulation. In one aspect nicotine is present in an amount of from 0.4 to 4 wt% based on the total weight of the flavoured vaporisable formulation. In one aspect nicotine is present in an amount of from 0.8 to 4 wt% based on the total weight of the flavoured vaporisable formulation. In one aspect nicotine is present in an amount of from 1 to 4 wt% based on the total weight of the flavoured vaporisable formulation. In one aspect nicotine is present in an amount of from 1.8 to 4 wt% based on the total weight of the flavoured vaporisable formulation. In one aspect nicotine is present in an amount of no greater than 3 wt% based on the total weight of the flavoured vaporisable formulation. In one aspect nicotine is present in an amount of from 0.4 to 3 wt% based on the total weight of the flavoured vaporisable formulation. In one aspect nicotine is present in an amount of from 0.8 to 3 wt% based on the total weight of the flavoured vaporisable formulation. In one aspect nicotine is present in an amount of from 1 to 3 wt% based on the total weight of the flavoured vaporisable formulation. In one aspect nicotine is present in an amount of from 1.8 to 3 wt% based on the total weight of the flavoured vaporisable formulation. In one aspect nicotine is present in an amount of no greater than 1.9 wt% based on the total weight of the flavoured vaporisable formulation. In one aspect nicotine is present in an amount of no greater than 1.8 wt% based on the total weight of the flavoured vaporisable formulation. In one aspect nicotine is present in an amount of from 0.4 to 1.9 wt% based on the total weight of the flavoured vaporisable formulation. In one aspect nicotine is present in an amount of from 0.4 to 1.8 wt% based on the total weight of the flavoured vaporisable formulation. In one aspect nicotine is present in an amount of from 0.5 to 1.9 wt% based on the total weight of the flavoured vaporisable formulation. In one aspect nicotine is present in an amount of from 0.5 to 1.8 wt% based on the total weight of the flavoured vaporisable formulation. In one aspect nicotine is present in an amount of from 0.8 to 1.9 wt% based on the total weight of the flavoured vaporisable formulation. In one aspect nicotine is present in an amount of from 0.8 to 1.8 wt% based on the total weight of the flavoured vaporisable formulation. In one aspect nicotine is present in an amount of from 1 to 1.9 wt% based on the total weight of the flavoured vaporisable formulation. In one aspect nicotine is present in an amount of from 1 to 1.8 wt% based on the total weight of the flavoured vaporisable formulation. In one aspect nicotine is present in an amount of less than 1.9 wt% based on the total weight of the flavoured vaporisable formulation. In one aspect nicotine is present in an amount of less than 1.8 wt% based on the total weight of the flavoured vaporisable formulation. In one aspect nicotine is present in an amount of from 0.4 to less than 1.9 wt% based on the total weight of the flavoured vaporisable formulation. In one aspect nicotine is present in an amount of from 0.4 to less than 1.8 wt% based on the total weight of the flavoured vaporisable formulation. In one aspect nicotine is present in an amount of from 0.5 to less than 1.9 wt% based on the total weight of the flavoured vaporisable formulation. In one aspect nicotine is present in an amount of from 0.5 to less than 1.8 wt% based on the total weight of the flavoured vaporisable formulation. In one aspect nicotine is present in an amount of from 0.8 to less than 1.9 wt% based on the total weight of the flavoured vaporisable formulation. In one aspect nicotine is present in an amount of from 0.8 to less than 1.8 wt% based on the total weight of the flavoured vaporisable formulation. In one aspect nicotine is present in an amount of from 1 to less than 1.9 wt% based on the total weight of the flavoured vaporisable formulation. In one aspect nicotine is present in an amount of from 1 to less than 1.8 wt% based on the total weight of the flavoured vaporisable formulation.

As discussed herein, we have found that each of the α, β and γ variants of cyclodextrin may be used and the most suitable one may be selected depending on the 'guest' components, such as the present flavours, to be complexed. We have found that the β variant complexes well with nicotine and other structurally similar active substances, so a small inclusion level is likely. 2-hydroxy-propyl-β-cyclodextrin complexes well with cyclic molecules which includes nicotine, but also key flavour components such as menthol and vanillin.

We have found that the addition of a combination of the one or more actives and the one or more flavours in a combined molar excess with respect to the one or more cyclodextrins may result in the actives and flavours precipitating from the formulation. Therefore in one aspect, the one or more cyclodextrins are present in a molar excess with respect to total combined amount of the one or more flavours and the one or more actives. In one aspect, the one or more cyclodextrins are present in a molar excess with respect to total combined amount of the one or more flavours and nicotine. In one aspect, the molar ratio of cyclodextrins to flavours and nicotine combined is at least 1.2:1. In one aspect, the molar ratio of cyclodextrins to flavours and nicotine combined is at least 1.4:1. In one aspect, the molar ratio of cyclodextrins to flavours and nicotine combined is at least 1.6:1. In one aspect, the molar ratio of cyclodextrins to flavours and nicotine combined is at least 1.8:1. In one aspect, the molar ratio of cyclodextrins to flavours and nicotine combined is at least 2:1. In one aspect, the molar ratio of cyclodextrins to flavours and nicotine combined is from 5:1 to 1.5:1. In one aspect, the molar ratio of cyclodextrins to flavours and nicotine combined is from 4:1 to 1.5:1. In one aspect, the molar ratio of cyclodextrins to flavours and nicotine combined is from 2:1 to 1.5:1. In one aspect, the molar ratio of cyclodextrins to flavours and nicotine combined is from 2:1 to 1.5:1. In one aspect, the molar ratio of cyclodextrins to flavours and nicotine combined is from 2:1 to 1.2:1.

### Process

As discussed herein, the present invention provides a process for forming a vapour, the process comprising
(a) providing a flavoured vaporisable formulation comprising
   (i) one or more solvents;
   (ii) a flavour; and
   (iii) one or more cyclodextrins;
      wherein the flavoured vaporisable formulation contains water in an amount of from 0 to 10 wt.% based on the vaporisable formulation,
      wherein the flavoured vaporisable formulation further comprises nicotine; and
(b) vaporising the flavoured vaporisable formulation.

### Further Aspects

The flavoured vaporisable formulation may be contained or delivered by any means. In one aspect the present invention provides a contained flavoured vaporisable formulation comprising
(a) a container; and
(b) a flavoured vaporisable formulation comprising
   (i) one or more solvents;
   (ii) a flavour; and
   (iii) one or more cyclodextrins;
      wherein the flavoured vaporisable formulation contains water in an amount of from 0 to 10 wt.% based on the vaporisable formulation,
      wherein the flavoured vaporisable formulation further comprises nicotine.

The container may be any suitable container, for example to allow for the storage or delivery of the formulation. In one aspect the container is configured for engagement with an electronic vapour provision system. The container may be a bottle. The container may be configured to become fluidly in communication with an electronic vapour provision system so that formulation may be delivered to the electronic vapour provision system. As described above, the present disclosure relates to container which may be used in an electronic vapour provision system, such as an e-cigarette. Throughout the following description the term "e-cigarette" is used; however, this term may be used interchangeably with electronic vapour provision system.

As discussed herein, the container of the present invention is typically provided for the delivery of flavoured vaporisable formulation to or within an e-cigarette. The flavoured vaporisable formulation may be held within an e-cigarette or may be sold as a separate container for subsequent use with or in an e-cigarette. As understood by one skilled in the art, e-cigarettes may contain a unit known as a detachable cartomiser which typically comprises a reservoir of flavoured vaporisable formulation, a wick material and a device for vaporising the flavoured vaporisable formulation. In some e-cigarettes, the cartomiser is part of a single-piece device and is not detachable. In one aspect the container is a cartomiser or is part of a cartomiser. In one aspect the container is not a cartomiser or part of a cartomiser and is a container, such as a tank, which may be used to deliver flavoured vaporisable formulation to or within an e-cigarette.

In one aspect the container is part of an e-cigarette. In one aspect the present invention further provides an electronic vapour provision system comprising:
(a) a vaporiser for vaporising liquid for inhalation by a user of the electronic vapour provision system;
(b) a power supply comprising a cell or battery for supplying power to the vaporiser; and
(c) a flavoured vaporisable formulation comprising
   (i) one or more solvents;
   (ii) a flavour; and
   (iii) one or more cyclodextrins;
   wherein the flavoured vaporisable formulation contains water in an amount of from 0 to 10 wt.% based on the vaporisable formulation.

In addition to the flavoured vaporisable formulation of the present invention and to systems such as containers and electronic aerosol provision systems containing the same, the present invention provides a process for reducing loss of flavour over time of a flavoured vaporisable formulation
the process comprising the steps of
   (a) providing a vaporisable material comprising at least one or more solvents;
   (b) incorporating into the vaporisable material a flavour and one or more cyclodextrins to form the flavoured vaporisable formulation
wherein the flavoured vaporisable formulation comprises
   (i) one or more solvents;
   (ii) a flavour; and
   (iii) one or more cyclodextrins;
      wherein the flavoured vaporisable formulation contains water in an amount of from 0 to 10 wt.% based on the vaporisable formulation;
      wherein the flavoured vaporisable formulation further comprises nicotine.

The process of the present invention may comprises additional steps either before the steps listed, after the steps listed or between one or more of the steps listed.

In addition to the flavoured vaporisable formulation of the present invention and to systems such as containers and electronic aerosol provision systems containing the same, the present invention provides use of one or more cyclodextrins for reducing loss of flavour over time of a flavoured vaporisable formulation, wherein the flavoured vaporisable formulation comprises (i) one or more solvents; and (ii) a flavour; and (iii) one or more cyclodextrins; wherein the flavoured vaporisable formulation contains water in an amount of from 0 to 10 wt.% based on the vaporisable formulation; wherein the flavoured vaporisable formulation further comprises nicotine.

### BRIEF DESCRIPTION OF THE DRAWINGS

The present invention will now be described in further detail by way of example only with reference to the accompanying figure in which:-
Figure 1 shows a graph;
Figure 2 shows a graph;
Figure 3 shows a schematic of an analysis method;
Figure 4 shows a spectra;
Figure 5 shows a spectra; and
Figure 6 shows a graph;

The invention will now be described with reference to the following non-limiting example.

### Examples

### Base Formulation (not according to the invention)

Base Formulation 1 was prepared containing:

| | |
|---|---|
| propylene glycol | 35.5 wt.% |
| glycerol | 39.5 wt.% |
| water | 25 wt.% |

Into this base formulation was incorporated a variety of 2-hydroxy-propyl-β-cyclodextrin (HP-B-CD) and menthol amounts as described below:
- Excess of menthol added to base formulation containing varying concentrations of HP-B-CD
- Formulation allowed to equilibrate for 24hrs on roller.
- Excess menthol centrifuged then filtered off by syringe filtration (Millex PVDF, 0.45µm pore size)
- Saturated formulation isolated and diluted in PES.
- Diluted formulation analysed via GC-FID to quantify maximum menthol concentration in formulation.
- Plotting maximum menthol concentration at each HP-B-CD concentration gives a gradient which shows how effective cyclodextrin is at solubilising menthol in that base formulation.
- 3 repeats at each cyclodextrin concentration.

### Visual Inspection

The products were subjected to visual inspection and the results given below. Solubilisation was considered to have occurred when substantially no menthol crystals could be visualised. Where the menthol crystals were considered to have solubilised the sample was given a Y (yes, solubilised). Where the menthol crystals were considered to have solubilised the sample was given a N (no, not solubilised).

| | **Cyclodextrin Concentration (%w/w)** | | | | |
|---|---|---|---|---|---|
| **Menthol Concentration** | **N/A** | **0.5** | **1** | **3** | **7** |
| 0.50% | Y | Y | Y | Y | Y |
| 0.60% | N | N | N | Y | Y |
| 0.70% | N | N | N | Y | Y |
| 0.80% | N | N | N | N | Y |
| 0.90% | N | N | N | N | Y |
| 1% | N | N | N | N | Y |

### Phase solubility

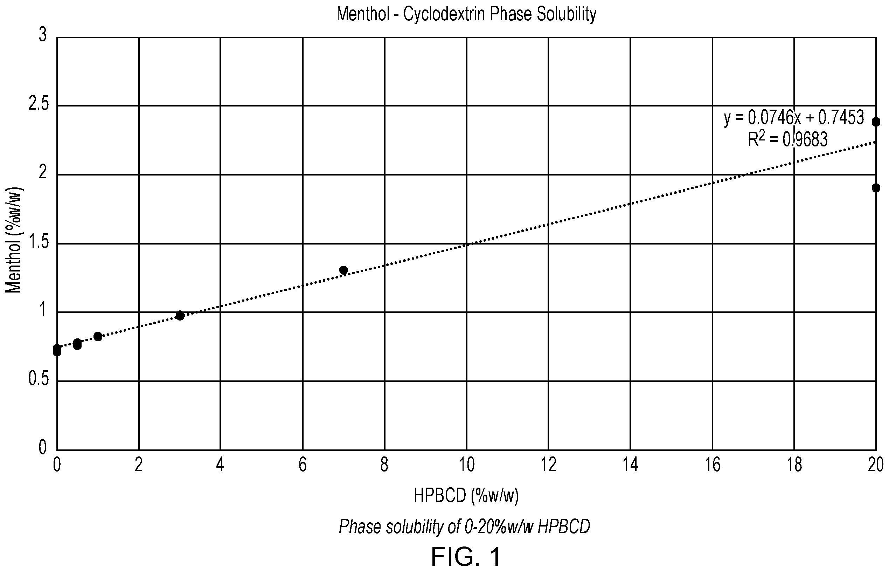

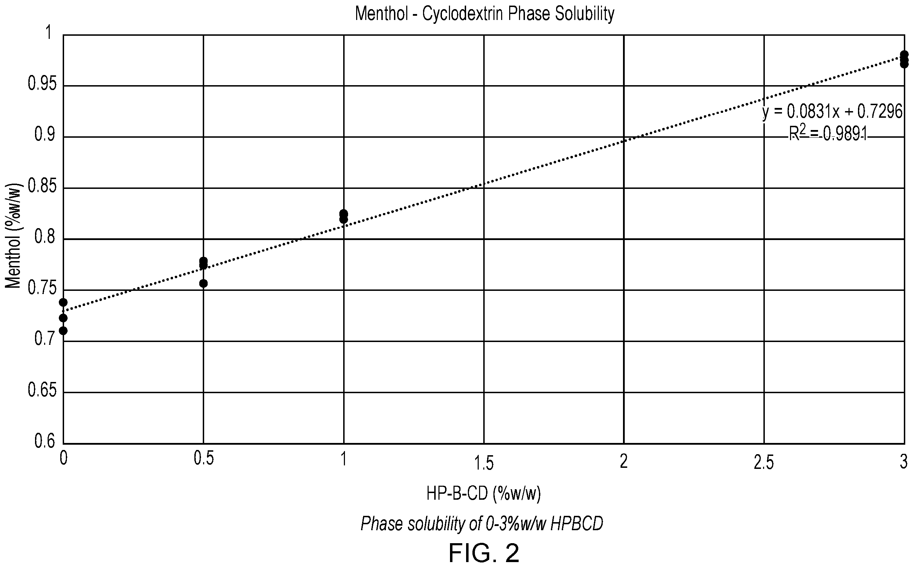

Phase solubility was also studied and the results of this are shown in Figures 1 and 2.

These analytical data support the solubility trend seen observationally in formulations i.e. menthol concentration is increased with increasing cyclodextrin concentration. A linear relationship of increased menthol concentration when increasing HP-B-CD concentration was observed. Approximately 30% increase in menthol concentration was found from 0%HP-B-CD to 3%HP-B-CD.

### Static Headspace

In addition to Base Formulation 1 (described above), Base Formulation 2 was prepared containing:

| | |
|---|---|
| propylene glycol | 40 wt. % |
| glycerol | 60 wt. % |

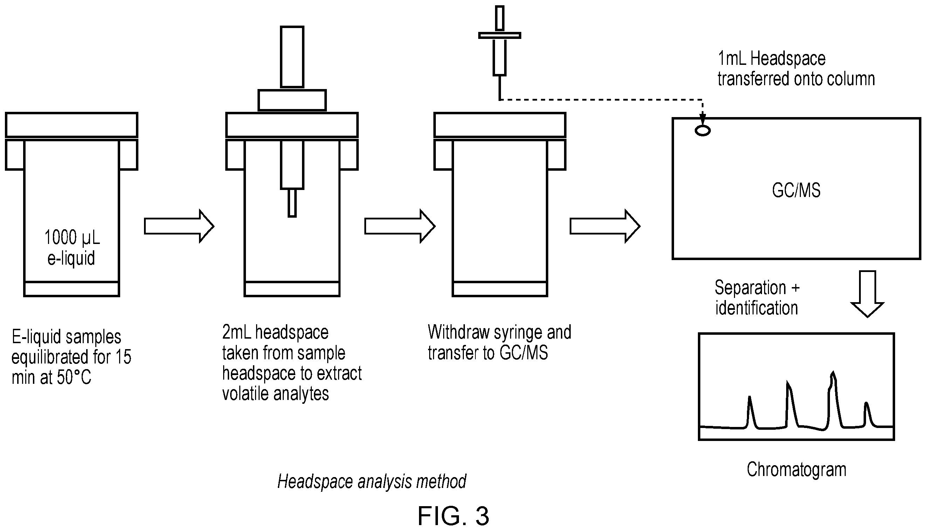

Base Formulation 1 and Base Formulation 2 containing 0%, 3% and 20%w/w HP-B-CD were prepared. 10g of each base formulations were spiked with 0.05g menthol. and 0.4g of a flavour comprising essential oils. 1mL headspace of volatile compounds was analysed to study whether cyclodextrins reduce the volatility of flavour compounds and thereby reduce flavour loss from cartomiser units. The method of analysis is shown in Figure 3. The concentrations of HPBCD used (w/w) were 0%, 0.5%, 1%, 3% and 7% and the following procedure was followed:
- Cartomiser units filled with e-liquid containing varying concentrations of cyclodextrin.
- Measurement of menthol concentration via GC-FID every two weeks in order to track menthol loss from cartomisers over time and to see if this is influenced by the presence of cyclodextrin.
- 0.1mL taken from cartomiser at each time point (two measurement at each concentration)
- Cartomisers kept at room temperature

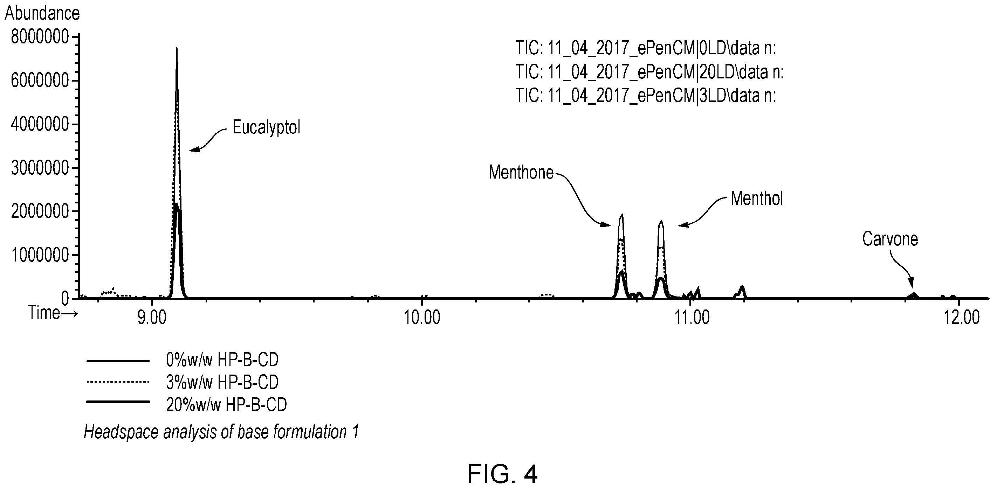

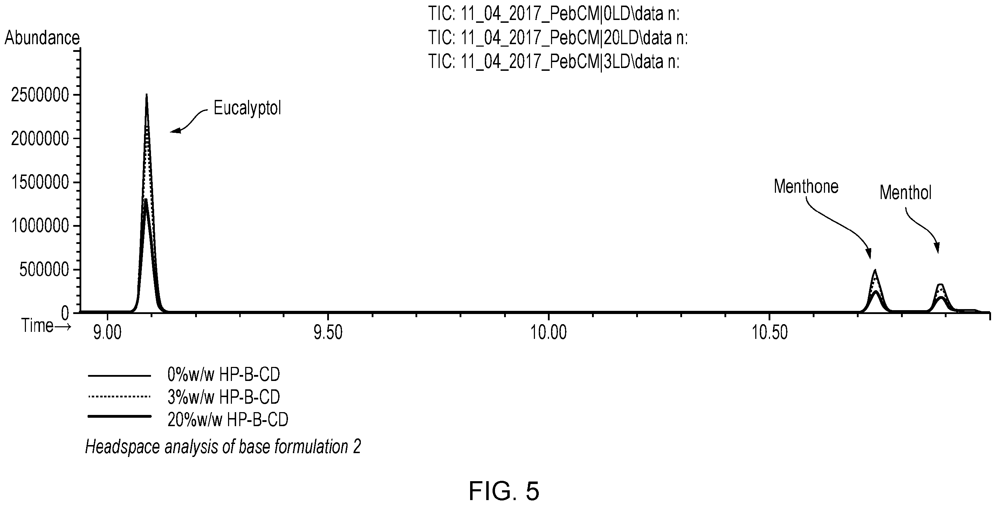

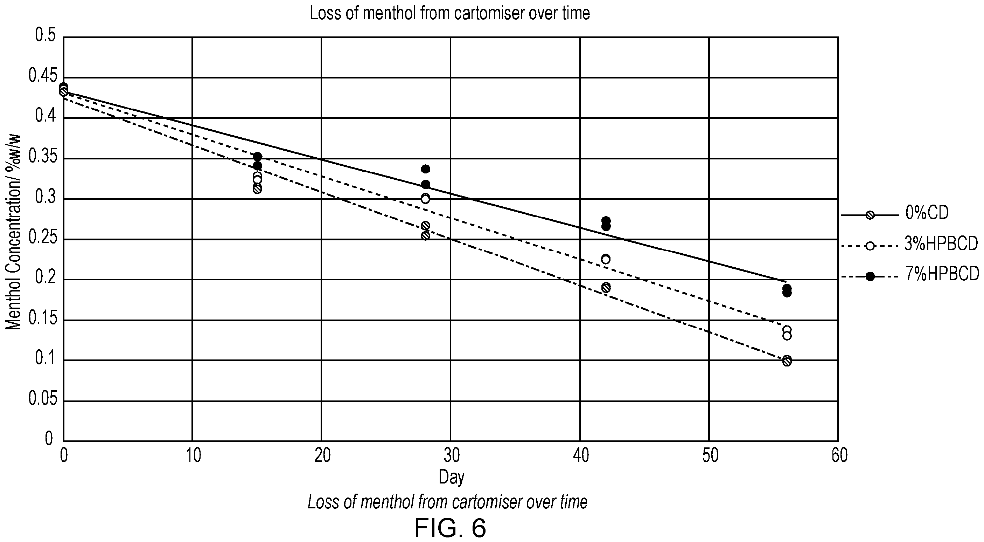

The results of the analysis are shown in Figures 4, 5 and 6. The headspace analysis showed that the presence of cyclodextrin reduces the concentration of flavour compounds in the headspace. The reduction of headspace loss was observed for both bases. The cartomiser loss also confirmed that cyclodextrin reduces the loss of menthol from cartomisers.

## Claims

1. A flavoured vaporisable formulation comprising
(i) one or more solvents;
(ii) a flavour; and
(iii) one or more cyclodextrins;
wherein the flavoured vaporisable formulation contains water in an amount of from 0 to 10 wt.% based on the vaporisable formulation;
wherein the flavoured vaporisable formulation further comprises nicotine.

2. A flavoured vaporisable formulation according to claim 1 wherein the total content of cyclodextrins is at least 1wt.% based on the vaporisable formulation.

3. A flavoured vaporisable formulation according to claim 1 or 2 wherein the one or more cyclodextrins are selected from the group consisting of substituted or unsubstituted (α)-cyclodextrin, substituted or unsubstituted (β)-cyclodextrin, substituted or unsubstituted (γ)-cyclodextrin, and mixtures thereof.

4. A flavoured vaporisable formulation according to any one of claims 1 to 3 wherein the one or more cyclodextrins comprises at least one or more substituted cyclodextrins.

5. A flavoured vaporisable formulation according to any one of claims 1 to 4 wherein the solvent is selected from water, glycerol, propylene glycol and mixtures thereof; such as the solvent is at least glycerol, propylene glycol or a mixture thereof; such as the solvent is mixture of glycerol and propylene glycol.

6. A flavoured vaporisable formulation according to any one of claims 1 to 5 wherein the flavoured vaporisable formulation contains water in an amount of from 0 to 5 wt.% based on the vaporisable formulation; such as the flavoured vaporisable formulation contains water in an amount of from 0 to 1 wt.% based on the vaporisable formulation; such as the flavoured vaporisable formulation contains water in an amount of from 0 to 0.1 wt.% based on the vaporisable formulation.

7. A flavoured vaporisable formulation according to any one of claims 1 to 6 wherein the solvent is present in an amount of at least 75 wt.% based on the flavoured vaporisable formulation; such as the solvent is present in an amount of at least 90 wt.% based on the flavoured vaporisable formulation.

8. A flavoured vaporisable formulation according to any one of claims 1 to 7 wherein the one or more flavours are selected from the group consisting of (4-(para-)methoxyphenyl)-2-butanone, vanillin, γ-undecalactone, menthone, 5-propenyl guaethol, menthol, para-mentha-8-thiol-3-one and mixtures thereof; such as the flavour is at least menthol.

9. A flavoured vaporisable formulation according to any one of claims 1 to 8 wherein the one or more flavours are present in a total amount of no greater than 2wt.% based on the flavoured vaporisable formulation; such as the one or more flavours are present in a total amount of from 0.01 to 1wt.% based on the flavoured vaporisable formulation.

10. A flavoured vaporisable formulation according to any one of claims 1 to 9 wherein the one or more cyclodextrins are selected from the group consisting of substituted (α)-cyclodextrin, substituted (β)-cyclodextrin, substituted (γ)-cyclodextrin, and mixtures thereof; such as the one or more cyclodextrins is at least 2-hydroxy-propyl-β-cyclodextrin.

11. A flavoured vaporisable formulation according to any one of claims 1 to 10 wherein the one or more cyclodextrins are present in a total amount of at least 7wt.% based on the flavoured vaporisable formulation; such as the one or more cyclodextrins are present in a total amount of no greater than 10wt.% based on the flavoured vaporisable formulation.

12. A flavoured vaporisable formulation according to any one of claims 1 to 11 wherein the one or more cyclodextrins are present in a total amount of from 2 to 9 wt.% based on the flavoured vaporisable formulation.

13. A process for forming a vapour, the process comprising
(a) providing a flavoured vaporisable formulation as defined in any one of claims 1 to 12; and
(b) vaporising the flavoured vaporisable formulation.

14. A contained flavoured vaporisable formulation comprising
(a) a container; and
(b) a flavoured vaporisable formulation as defined in any one of claims 1 to 12.

15. An electronic vapour provision system comprising:
(a) a vaporiser for vaporising liquid for inhalation by a user of the electronic vapour provision system;
(b) a power supply comprising a cell or battery for supplying power to the vaporiser; and
(c) a flavoured vaporisable formulation comprising
(i) one or more solvents;
(ii) a flavour; and
(iii) one or more cyclodextrins;
wherein the flavoured vaporisable formulation contains water in an amount of from 0 to 10 wt.% based on the vaporisable formulation.

16. An electronic vapour provision system according to claim 15 wherein the flavoured vaporisable formulation is a flavoured vaporisable formulation as defined in any one of claims 2 to 12.

17. A process for at least one of increasing solubility of a flavour and/or reducing loss of flavour over time of a flavoured vaporisable formulation
the process comprising the steps of
(a) providing a vaporisable material comprising at least one or more solvents;
(b) incorporating into the vaporisable material a flavour and one or more cyclodextrins to form the flavoured vaporisable formulation;
wherein the flavoured vaporisable formulation comprises
(i) one or more solvents;
(ii) a flavour; and
(iii) one or more cyclodextrins;
wherein the flavoured vaporisable formulation contains water in an amount of from 0 to 10 wt.% based on the vaporisable formulation;
wherein the flavoured vaporisable formulation further comprises nicotine.

18. A process according to claim 17 wherein the flavoured vaporisable formulation is a flavoured vaporisable formulation as defined in any one of claims 2 to 12.

19. Use of one or more cyclodextrins for increasing solubility of a flavour and/or reducing loss of flavour over time of a flavoured vaporisable formulation, wherein the flavoured vaporisable formulation comprises
(i) one or more solvents;
(ii) a flavour; and
(iii) one or more cyclodextrins;
wherein the flavoured vaporisable formulation contains water in an amount of from 0 to 10 wt.% based on the vaporisable formulation;
wherein the flavoured vaporisable formulation further comprises nicotine.

20. Use according to claim 19 wherein the flavoured vaporisable formulation is a flavoured vaporisable formulation as defined in any one of claims 2 to 12.

## Patentansprüche

1. Aromatisierte verdampfbare Formulierung umfassend
(i) ein oder mehrere Lösungsmittel;
(ii) ein Aroma; und
(iii) ein oder mehrere Cyclodextrine;
wobei die aromatisierte verdampfbare Formulierung Wasser in einer Menge von 0 bis 10 Gew.-% bezogen auf die verdampfbare Formulierung enthält;
wobei die aromatisierte verdampfbare Formulierung ferner Nikotin umfasst.

2. Aromatisierte verdampfbare Formulierung nach Anspruch 1, wobei der Gesamtgehalt an Cyclodextrinen wenigstens 1 Gew.-% bezogen auf die verdampfbare Formulierung beträgt.

3. Aromatisierte verdampfbare Formulierung nach Anspruch 1 oder 2, wobei das eine oder die mehreren Cyclodextrine ausgewählt sind aus der Gruppe bestehend aus substituiertem oder unsubstituiertem (α)-Cyclodextrin, substituiertem oder unsubstituiertem (β)-Cyclodextrin, substituiertem oder unsubstituiertem (γ)-Cyclodextrin und Gemischen davon.

4. Aromatisierte verdampfbare Formulierung nach einem der Ansprüche 1 bis 3, wobei das eine oder die mehreren Cyclodextrine wenigstens ein oder mehrere substituierte Cyclodextrine umfassen.

5. Aromatisierte verdampfbare Formulierung nach einem der Ansprüche 1 bis 4, wobei das Lösungsmittel ausgewählt ist aus Wasser, Glycerol, Propylenglycol und Gemischen davon; wie z.B. das Lösungsmittel wenigstens Glycerol, Propylenglycol oder ein Gemisch davon ist; wie z.B. das Lösungsmittel ein Gemisch von Glycerol und Propylenglycol ist.

6. Aromatisierte verdampfbare Formulierung nach einem der Ansprüche 1 bis 5, wobei die aromatisierte verdampfbare Formulierung Wasser in einer Menge von 0 bis 5 Gew.-% bezogen auf die verdampfbare Formulierung enthält; wie z.B. die aromatisierte verdampfbare Formulierung Wasser in einer Menge von 0 bis 1 Gew.-% bezogen auf die verdampfbare Formulierung enthält; wie z.B. die aromatisierte verdampfbare Formulierung Wasser in einer Menge von 0 bis 0,1 Gew.-% bezogen auf die verdampfbare Formulierung enthält.

7. Aromatisierte verdampfbare Formulierung nach einem der Ansprüche 1 bis 6, wobei das Lösungsmittel in einer Menge von wenigstens 75 Gew.-% bezogen auf die aromatisierte verdampfbare Formulierung vorhanden ist; wie z.B. das Lösungsmittel in einer Menge von wenigstens 90 Gew.-% bezogen auf die aerosolisierbare Formulierung vorhanden ist.

8. Aromatisierte verdampfbare Formulierung nach einem der Ansprüche 1 bis 7, wobei das eine oder die mehreren Aromen ausgewählt sind aus der Gruppe bestehend aus (4-(para-)Methoxyphenyl)-2-butanon, Vanillin, γ-Undecalacton, Menthon, 5-Propenylguaethol, Menthol, para-Mentha-8-thiol-3-on und Gemischen davon; wie z.B. das Aroma wenigstens Menthol ist.

9. Aromatisierte verdampfbare Formulierung nach einem der Ansprüche 1 bis 8, wobei das eine oder die mehreren Aromen in einer Gesamtmenge von nicht mehr als 2 Gew.-% bezogen auf die aromatisierte verdampfbare Formulierung vorhanden sind; wie z.B. das eine oder die mehreren Aromen in einer Gesamtmenge von 0,01 bis 1 Gew.-% bezogen auf die aromatisierte verdampfbare Formulierung vorhanden sind.

10. Aromatisierte verdampfbare Formulierung nach einem der Ansprüche 1 bis 9, wobei das eine oder die mehreren Cyclodextrine ausgewählt sind aus der Gruppe bestehend aus substituiertem (α)-Cyclodextrin, substituiertem (β)-Cyclodextrin, substituiertem (γ)-Cyclodextrin und Gemischen davon; wie z.B. das eine oder die mehreren Cyclodextrine wenigstens 2-Hydroxypropyl-β-cyclodextrin sind.

11. Aromatisierte verdampfbare Formulierung nach einem der Ansprüche 1 bis 10, wobei das eine oder die mehreren Cyclodextrine in einer Gesamtmenge von wenigstens 7 Gew.-% bezogen auf die aromatisierte verdampfbare Formulierung vorhanden sind; wie z.B. das eine oder die mehreren Cyclodextrine in einer Gesamtmenge von nicht mehr als 10 Gew.-% bezogen auf die aromatisierte verdampfbare Formulierung vorhanden sind.

12. Aromatisierte verdampfbare Formulierung nach einem der Ansprüche 1 bis 11, wobei das eine oder die mehreren Cyclodextrine in einer Gesamtmenge von 2 bis 9 Gew.-% bezogen auf die aromatisierte verdampfbare Formulierung vorhanden sind.

13. Verfahren zur Herstellung eines Dampfs, wobei das Verfahren umfasst
(a) Bereitstellen einer aromatisierten verdampfbaren Formulierung nach einem der Ansprüche 1 bis 12; und
(b) Verdampfen der aromatisierten verdampfbaren Formulierung.

14. Eingeschlossene aromatisierte verdampfbare Formulierung umfassend
(a) einen Behälter; und
(b) eine aromatisierte verdampfbare Formulierung nach einem der Ansprüche 1 bis 12.

15. Elektronisches Dampfbereitstellungssystem umfassend:
(a) einen Verdampfer zum Verdampfen von Flüssigkeit zur Inhalation durch einen Benutzer des elektronischen Dampfbereitstellungssystems;
(b) eine Stromversorgung umfassend eine Zelle oder Batterie zur Versorgung des Verdampfers mit Strom; und
(c) eine aromatisierte verdampfbare Formulierung umfassend
(i) ein oder mehrere Lösungsmittel;
(ii) ein Aroma; und
(iii) ein oder mehrere Cyclodextrine;
wobei die aromatisierte verdampfbare Formulierung Wasser in einer Menge von 0 bis 10 Gew.-% bezogen auf die verdampfbare Formulierung enthält.

16. Elektronisches Aerosolbereitstellungssystem nach Anspruch 15, wobei die aromatisierte verdampfbare Formulierung eine aromatisierte verdampfbare Formulierung nach einem der Ansprüche 2 bis 12 ist.

17. Verfahren zu wenigstens einem von Erhöhen der Löslichkeit eines Aromas und/oder Verringern von Aromaverlust einer aromatisierten verdampfbaren Formulierung mit der Zeit
wobei das Verfahren die Schritte umfasst
(a) Bereitstellen eines verdampfbaren Materials umfassend wenigstens ein oder mehrere Lösungsmittel;
(b) Einverleiben eines Aromas und eines oder mehrerer Cyclodextrine in das verdampfbare Material, um die aromatisierte verdampfbare Formulierung zu bilden;
wobei die aromatisierte verdampfbare Formulierung umfasst
(i) ein oder mehrere Lösungsmittel;
(ii) ein Aroma; und
(iii) ein oder mehrere Cyclodextrine;
wobei die aromatisierte verdampfbare Formulierung Wasser in einer Menge von 0 bis 10 Gew.-% bezogen auf die verdampfbare Formulierung enthält;
wobei die aromatisierte verdampfbare Formulierung ferner Nikotin umfasst.

18. Verfahren nach Anspruch 17, wobei die aromatisierte verdampfbare Formulierung eine aromatisierte verdampfbare Formulierung nach einem der Ansprüche 2 bis 12 ist.

19. Verwendung eines oder mehrerer Cyclodextrine zum Erhöhen der Löslichkeit eines Aromas und/oder Verringern von Aromaverlust einer aromatisierten verdampfbaren Formulierung mit der Zeit, wobei die aromatisierte verdampfbare Formulierung umfasst
(i) ein oder mehrere Lösungsmittel;
(ii) ein Aroma; und
(iii) ein oder mehrere Cyclodextrine;
wobei die aromatisierte verdampfbare Formulierung Wasser in einer Menge von 0 bis 10 Gew.-% bezogen auf die verdampfbare Formulierung enthält;
wobei die aromatisierte verdampfbare Formulierung ferner Nikotin umfasst.

20. Verwendung nach Anspruch 19, wobei die aromatisierte verdampfbare Formulierung eine aromatisierte verdampfbare Formulierung nach einem der Ansprüche 2 bis 12 ist.

## Revendications

1. Formulation vaporisable aromatisée comprenant
(i) un ou plusieurs solvants ;
(ii) un arôme ; et
(iii) une ou plusieurs cyclodextrines ;
dans laquelle la formulation vaporisable aromatisée contient de l'eau en une quantité de 0 à 10 % en poids par rapport à la formulation vaporisable ;
dans laquelle la formulation vaporisable aromatisée comprend en outre de la nicotine.

2. Formulation vaporisable aromatisée selon la revendication 1, dans laquelle la teneur totale en cyclodextrines est d'au moins 1 % en poids par rapport à la formulation vaporisable.

3. Formulation vaporisable aromatisée selon la revendication 1 ou 2, dans laquelle la ou les cyclodextrines sont choisies dans le groupe constitué par la (α)-cyclodextrine substituée ou non substituée, la (β)-cyclodextrine substituée ou non substituée, la (γ)-cyclodextrine substituée ou non substituée, et leurs mélanges.

4. Formulation vaporisable aromatisée selon l'une quelconque des revendications 1 à 3, dans laquelle la ou les cyclodextrines comprennent au moins une ou plusieurs cyclodextrines substituées.

5. Formulation vaporisable aromatisée selon l'une quelconque des revendications 1 à 4, dans laquelle le solvant est choisi parmi l'eau, le glycérol, le propylèneglycol et leurs mélanges ; telle que le solvant est au moins le glycérol, le propylèneglycol ou un mélange de ceux-ci ; telle que le solvant est un mélange de glycérol et de propylèneglycol.

6. Formulation vaporisable aromatisée selon l'une quelconque des revendications 1 à 5, dans laquelle la formulation vaporisable aromatisée contient de l'eau en une quantité de 0 à 5 % en poids par rapport à la formulation vaporisable ; telle que la formulation vaporisable aromatisée contient de l'eau en une quantité de 0 à 1 % en poids par rapport à la formulation vaporisable ; telle que la formulation vaporisable aromatisée contient de l'eau en une quantité de 0 à 0,1 % en poids par rapport à la formulation vaporisable.

7. Formulation vaporisable aromatisée selon l'une quelconque des revendications 1 à 6, dans laquelle le solvant est présent en une quantité d'au moins 75 % en poids par rapport à la formulation vaporisable aromatisée ; telle que le solvant est présent en une quantité d'au moins 90 % en poids par rapport à la formulation vaporisable aromatisée.

8. Formulation vaporisable aromatisée selon l'une quelconque des revendications 1 à 7, dans laquelle l'arôme ou les arômes sont sélectionnés dans le groupe constitué par (4-(para-)méthoxyphényl)-2-butanone, vanilline, γ-undécalactone, menthone, 5-propényl guaéthol, menthol, para-mentha-8-thiol-3-one et leurs mélanges ; telle que l'arôme est au moins le menthol.

9. Formulation vaporisable aromatisée selon l'une quelconque des revendications 1 à 8, dans laquelle l'arôme ou les arômes sont présents en une quantité totale non supérieure à 2 % en poids par rapport à la formulation vaporisable aromatisée ; telle que l'arôme ou les arômes sont présents en une quantité totale de 0,01 % à 1 % en poids par rapport à la formulation vaporisable aromatisée.

10. Formulation vaporisable aromatisée selon l'une quelconque des revendications 1 à 9 dans laquelle la ou les cyclodextrines sont sélectionnées dans le groupe constitué par une (α)-cyclodextrine substituée, une (β)-cyclodextrine substituée, une (γ)-cyclodextrine substituée et leurs mélanges ; telle que la ou les cyclodextrines sont au moins la 2-hydroxy-propyl-β-cyclodextrine.

11. Formulation vaporisable aromatisée selon l'une quelconque des revendications 1 à 10, dans laquelle la ou les cyclodextrines sont présentes en une quantité totale d'au moins 7 % en poids par rapport à la formulation vaporisable aromatisée ; telle que la ou les cyclodextrines sont présentes en une quantité totale non supérieure à 10 % en poids par rapport à la formulation vaporisable aromatisée.

12. Formulation vaporisable aromatisée selon l'une quelconque des revendications 1 à 11, dans laquelle la ou les cyclodextrines sont présentes en une quantité totale de 2 à 9 % en poids par rapport à la formulation vaporisable aromatisée.

13. Procédé pour la formation d'une vapeur, le procédé comprenant
(a) la fourniture d'une formulation vaporisable aromatisée telle que définie dans l'une quelconque des revendications 1 à 12 ; et
(b) la vaporisation de la formulation vaporisable aromatisée.

14. Formulation vaporisable aromatisée contenue comprenant
(a) un récipient ; et
(b) une formulation vaporisable aromatisée telle que définie dans l'une quelconque des revendications 1 à 12.

15. Système électronique de fourniture de vapeur comprenant :
(a) un vaporisateur pour la vaporisation d'un liquide destiné à une inhalation par un utilisateur du système électronique de fourniture de vapeur ;
(b) une alimentation électrique comprenant une cellule ou une batterie pour fournir de l'énergie au vaporisateur ; et
(c) une formulation vaporisable aromatisée comprenant
(i) un ou plusieurs solvants ;
(ii) un arôme ; et
(iii) une ou plusieurs cyclodextrines ;
dans lequel la formulation vaporisable aromatisée contient de l'eau en une quantité de 0 à 10 % en poids par rapport à la formulation vaporisable.

16. Système électronique de fourniture de vapeur selon la revendication 15, dans lequel la formulation vaporisable aromatisée est une formulation vaporisable aromatisée telle que définie dans l'une quelconque des revendications 2 à 12.

17. Procédé permettant au moins l'une parmi l'augmentation de la solubilité d'un arôme et/ou la réduction de la perte d'arôme dans le temps d'une formulation vaporisable aromatisée
le procédé comprenant les étapes de
(a) fourniture d'une matière vaporisable comprenant au moins un ou plusieurs solvants ;
(b) incorporation dans la matière vaporisable d'un arôme et d'une ou plusieurs cyclodextrines pour former la formulation vaporisable aromatisée ;
dans lequel la formulation vaporisable aromatisée comprend
(i) un ou plusieurs solvants ;
(ii) un arôme ; et
(iii) une ou plusieurs cyclodextrines ;
dans laquelle la formulation vaporisable aromatisée contient de l'eau en une quantité de 0 à 10 % en poids par rapport à la formulation vaporisable ;
dans laquelle la formulation vaporisable aromatisée comprend en outre de la nicotine.

18. Procédé selon la revendication 17, dans lequel la formulation vaporisable aromatisée est une formulation vaporisable aromatisée telle que définie dans l'une quelconque des revendications 2 à 12.

19. Utilisation d'une ou plusieurs cyclodextrines pour augmenter la solubilité d'un arôme et/ou réduire la perte d'arôme dans le temps d'une formulation vaporisable aromatisée, dans laquelle la formulation vaporisable aromatisée comprend
(i) un ou plusieurs solvants ;
(ii) un arôme ; et
(iii) une ou plusieurs cyclodextrines ;
dans laquelle la formulation vaporisable aromatisée contient de l'eau en une quantité de 0 à 10 % en poids par rapport à la formulation vaporisable ;
dans laquelle la formulation vaporisable aromatisée comprend en outre de la nicotine.

20. Utilisation selon la revendication 19, dans laquelle la formulation vaporisable aromatisée est une formulation vaporisable aromatisée telle que définie dans l'une quelconque des revendications 2 à 12.
